# EUROPEAN PATENT APPLICATION

(11) **EP 4 800 818 A2**
(43) Date of publication of application: **02.09.2026**
(21) Application number: 26191621.7
(22) Date of filing: 17.05.2024
(51) Int. Cl.: H01M 50/164

(54) **LID BODY, LID MAIN BODY, AND POWER STORAGE DEVICE**

(30) Priority: 19.05.2023 JP 2023083534
(62) Document number(s) of the earlier application(s) in accordance with Art. 76 EPC: 24811073.6 / 4 715 975
(71) Applicant: Dai Nippon Printing Co., Ltd., Tokyo 162-8001 (JP)
(72) Inventor: URIU, Toshibumi, Tokyo, 162-8001 (JP); MIYASHIRO, Kae, Tokyo, 162-8001 (JP); KANAZAWA, Sayako, Tokyo, 162-8001 (JP); SASAKI, Miho, Tokyo, 162-8001 (JP)
(74) Representative: Müller-Boré & Partner Patentanwälte PartG mbB

(57) **Abstract**

This lid body is used for the exterior body of a power storage device and comprises: a lid main body configured including a metal material; and a covering body configured including a resin material and covering a part of the lid main body. The lid main body has a covered part covered by the covering body. At least a part of the covered part has a rough surface.

## Description

### Technical Field

The present invention relates to a lid, a lid main body, and an electrical storage device.

### Background Art

PTL 1 discloses an example of an electrical storage device. The electrical storage device includes an electrode assembly and an outer packaging that seals the electrode assembly. The outer packaging includes an outer package film wrapping the electrode assembly and a lid joined to the outer package film. The lid is formed from, for example, a metal material.

### Citation List

### Patent Literature

PTL 1: Japanese Patent Laid-open Publication No. 2022-123686

### Summary of Invention

### Technical Problem

In the electrical storage device, since the outer package film contains a resin material and the lid is formed from a metal material, there is a possibility that the joining strength between the outer package film and the lid is low. Therefore, improvement is needed for suitably sealing the electrode assembly with the outer packaging.

An object of the present invention is to provide an electrical storage device in which an electrode assembly can be suitably sealed with an outer packaging, a lid that is used for the electrical storage device, and a lid main body constituting the lid.

### Solution to Problem

A lid according to a first aspect of the present invention is a lid used for an outer packaging of an electrical storage device, the lid including: a lid main body containing a metal material; and a cover that contains a resin material and covers a part of the lid main body, in which the lid main body has a cover portion covered with the cover, and the cover portion has at least one of a through-hole, a recessed portion recessed on a side opposite to the cover, or a projecting portion protruding toward the cover.

A lid according to a second aspect of the present invention is the lid according to the first aspect, in which at least a part of the cover portion is sandwiched by the cover.

A lid according to a third aspect of the present invention is the lid according to the first or second aspect, in which at least a part of the cover portion has a rough surface.

A lid according to a fourth aspect of the present invention is a lid used for an outer packaging of an electrical storage device, the lid including: a lid main body containing a metal material; and a cover that contains a resin material and covers a part of the lid main body, in which the lid main body has a cover portion covered with the cover, and at least a part of the cover portion has a rough surface.

A lid according to a fifth aspect of the present invention is the lid according to the fourth aspect, in which a maximum height roughness Rz of the rough surface is in a range of 0.01 µm or more and 500 µm or less.

A lid main body according to a sixth aspect of the present invention is a lid main body constituting a lid used for an outer packaging of an electrical storage device, in which the lid main body contains a metal material, and has a cover portion covered with a cover containing a resin material, and the cover portion has at least one of a through-hole, a recessed portion recessed on a side opposite to the cover, or a projecting portion protruding toward the cover.

A lid main body according to a seventh aspect of the present invention is a lid main body constituting a lid used for an outer packaging of an electrical storage device, in which the lid main body contains a metal material, and has a cover portion covered with a cover containing a resin material, and at least a part of the cover portion has a rough surface.

An electrical storage device according to an eighth aspect of the present invention includes: an electrode assembly; and an outer packaging that seals the electrode assembly, in which the outer packaging includes: an outer package film that wraps the electrode assembly; and a lid joined to the outer package film, the lid includes: a lid main body containing a metal material; and a cover that contains a resin material and covers a part of the lid main body, the lid main body has a cover portion covered with the cover, and the cover portion has at least one of a through-hole, a recessed portion recessed on a side opposite to the cover, or a projecting portion protruding toward the cover.

An electrical storage device according to a ninth aspect of the present invention includes: an electrode assembly; and an outer packaging that seals the electrode assembly, in which the outer packaging includes: an outer package film that wraps the electrode assembly; and a lid joined to the outer package film, the lid includes: a lid main body containing a metal material; and a cover that contains a resin material and covers a part of the lid main body, the lid main body has a cover portion covered with the cover, and at least a part of the cover portion has a rough surface.

### Advantageous Effects of Invention

According to the lid, the lid main body, and the electrical storage device of the present invention, it is possible to contribute to suitably sealing the electrode assembly with the outer packaging.

### Brief Description of Drawings

[FIG. 1A] Fig. 1A is a perspective view of an electrical storage device according to an embodiment.
[FIG. 1B] Fig. 1B is a view relating to a method for measuring a sealing strength of a second seal portion of the electrical storage device of Fig. 1A.
[FIG. 2] Fig. 2 is a sectional view showing a layer configuration of an outer package film included in the electrical storage device in Fig. 1A.
[FIG. 3] Fig. 3 is a view in which the outer package film included in the electrical storage device of Fig. 1A is unfolded.
[FIG. 4] Fig. 4 is a sectional view taken along line D4-D4 in Fig. 1A.
[FIG. 5] Fig. 5 is a side view of a lid of Fig. 4 where the outer package film is omitted.
[FIG. 6] Fig. 6 is a plan view of the lid of Fig. 4 where the outer package film is omitted.
[FIG. 7] Fig. 7 is a perspective view of a front side of a lid main body of the lid of Fig. 4.
[FIG. 8] Fig. 8 is a perspective view of a back side of the lid main body of Fig. 7.
[FIG. 9] Fig. 9 is a sectional view taken along line D9-D9 in Fig. 1A.
[FIG. 10] Fig. 10 is a flowchart showing an example of a manufacturing process of the electrical storage device of Fig. 1A.
[FIG. 11] Fig. 11 is a perspective view of a back side of a lid main body of a second modification.
[FIG. 12] Fig. 12 is an enlarged view of the X part of Fig. 11.
[FIG. 13] Fig. 13 is a perspective view of a back side of a lid main body of a third modification.
[FIG. 14] Fig. 14 is a cross-sectional view of an electrical storage device including a lid main body of a fourth modification.
[FIG. 15] Fig. 15 is a cross-sectional view of an electrical storage device including a lid main body of a fifth modification.
[FIG. 16] Fig. 16 is a sectional view of an electrical storage device of a seventh modification.

### Description of Embodiments

Hereinafter, an electrical storage device according to an embodiment of the present invention will be described with reference to the drawings. Note that, in this specification, a numerical range indicated by the term "A to B" means "A or more" and "B or less". For example, the notation 2 to 15 mm means 2 mm or more and 15 mm or less.

### [Embodiments]

### <1-1. Configuration of electrical storage device>

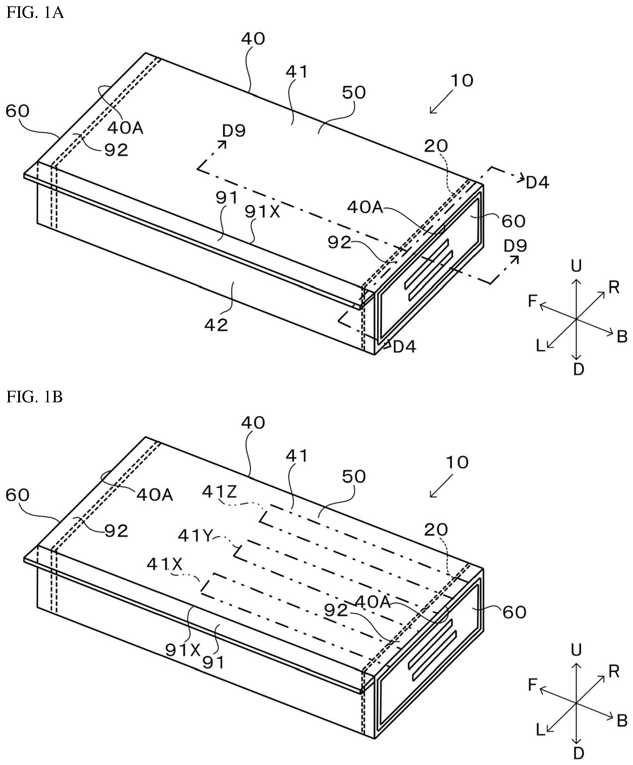

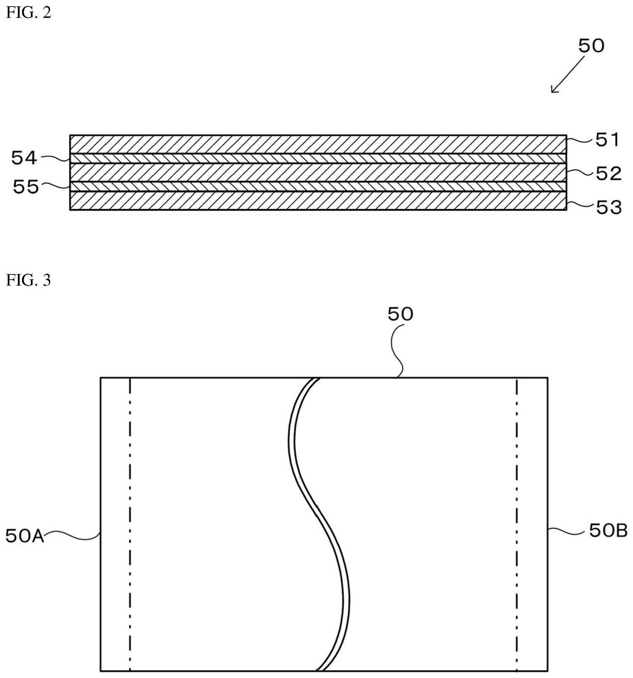

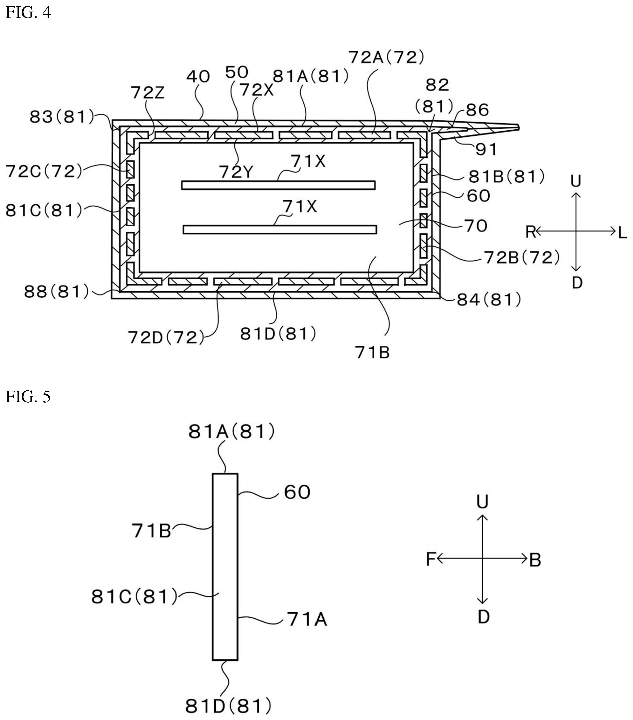

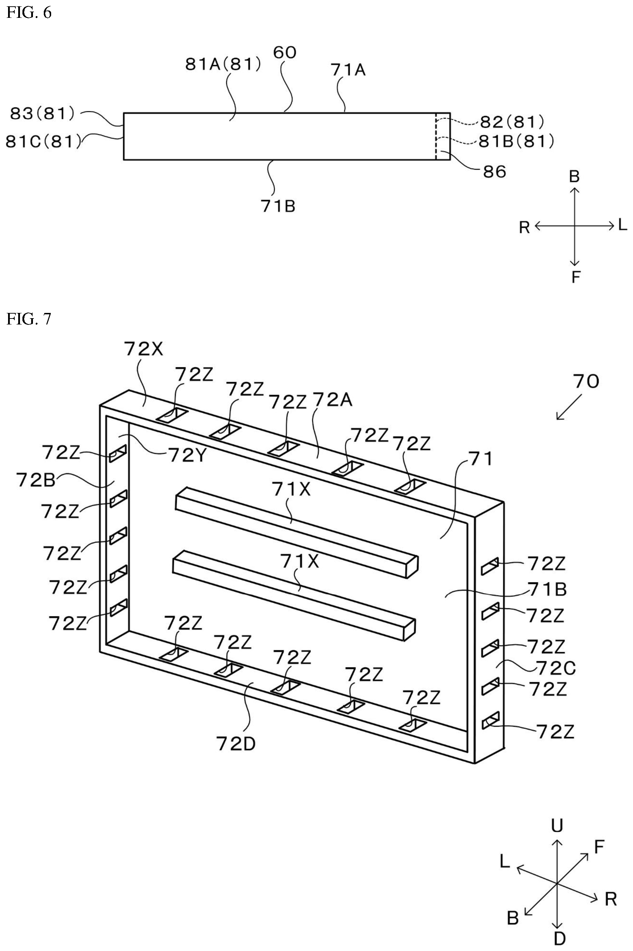

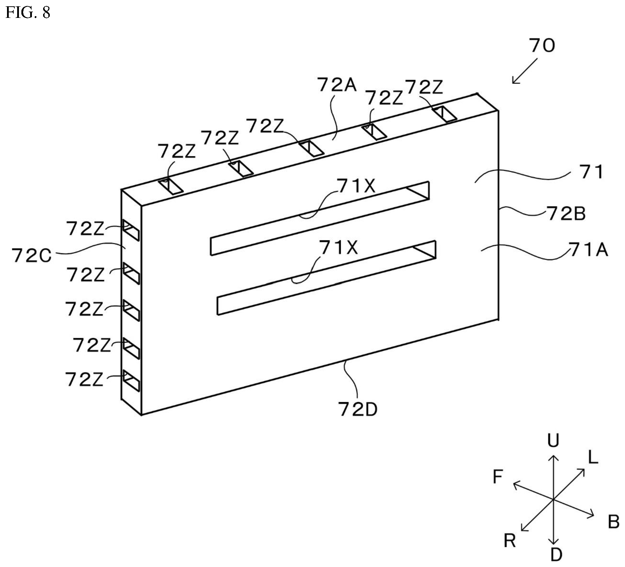

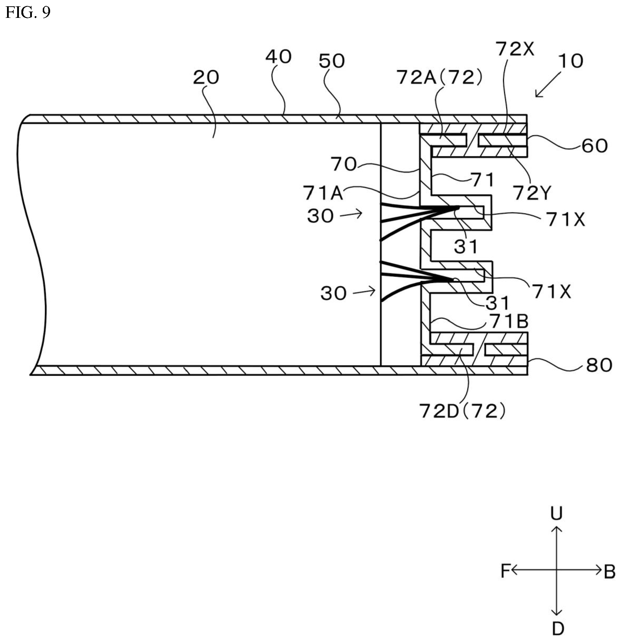

Fig. 1A is a perspective view schematically showing an electrical storage device 10 of an embodiment. Fig. 1B is a view relating to a method for measuring a sealing strength of a second seal portion 92 of the electrical storage device 10 in Fig. 1. Fig. 2 is a sectional view showing a layer configuration of an outer package film 50 included in the electrical storage device 10 in Fig. 1A. Fig. 3 is a view in which the outer package film 50 included in the electrical storage device 10 of Fig. 1A is unfolded. Fig. 4 is a sectional view taken along line D4-D4 in Fig. 1A. Fig. 5 is a side view of a lid 60 included in the electrical storage device 10 of Fig. 1A. Fig. 6 is a plan view of the lid 60 of Fig. 5. Fig. 7 is a perspective view of a front side of a lid main body 70 included in the lid 60 of Fig. 4. Fig. 8 is a perspective view of a back side of the lid main body 70 of Fig. 7. Fig. 9 is a sectional view taken along line D9-D9 in Fig. 1A. Note that in Fig. 1A, the direction along the arrow UD indicates a thickness direction of the electrical storage device 10, the direction along the arrow LR indicates a width direction of the electrical storage device 10, and the direction along the arrow FB indicates a depth direction of the electrical storage device 10. The direction indicated by each of arrows UD, LR, and FB is also shared across the subsequent drawings.

The electrical storage device 10 includes an electrode assembly 20 including a current collector 30, and an outer packaging 40. The electrode assembly 20 includes, for example, a lithium ion battery, a capacitor, a lithium ion polymer battery, an all-solid-state battery, a semi-solid-state battery, a pseudo-solid-state battery, a polymer battery, an all-polymer battery, a lead storage battery, a nickel-hydrogen storage battery, a nickel-cadmium storage battery, a nickel-iron storage battery, a nickel-zinc storage battery, a silver oxide-zinc storage battery, a metal-air battery, a polyvalent cation battery, or electrodes (positive electrode and negative electrode) constituting an electrical storage member such as a capacitor, and a separator. In the present embodiment, the shape of the electrode assembly 20 is substantially a cuboid. Note that the "substantially cuboid" includes a perfect cuboid and also a solid that can be seen as a cuboid by modifying the shape of a part of the outer surface thereof, for example. The shape of the electrode assembly 20 may be, for example, a cylinder or a polygonal prism.

One end part 31 of the current collector 30 (see Fig. 9) is connected to the lid 60.

The outer packaging 40 seals the electrode assembly 20. The outer packaging 40 includes the outer package film 50 and the lid 60. The outer package film 50 wraps the electrode assembly 20 so as to have an opening part 40A. In the present embodiment, the outer package film 50 is wound around the electrode assembly 20 so as to have the opening part 40A. The lid 60 is disposed on a side of the electrode assembly 20 so as to close the opening part 40A. Note that the electrode assembly 20 may be housed inside the outer package film 50 configured into a tubular shape such that the opening part 40A is formed, and the opening part 40A may be closed by the lid 60.

For example, there is a method in which a recess for housing the electrode assembly 20 is formed in the outer package film 50 through cold molding. However, it is not always easy to form a deep recess by such a method. When an attempt is made to form a deep (for example, 15 mm in terms of molding depth) recess by cold molding, pinholes or cracks are generated in the outer package film 50, leading to a rise in possibility that battery performance is degraded. On the other hand, since the outer packaging 40 seals the electrode assembly 20 by winding the outer package film 50 around the electrode assembly 20, the electrode assembly 20 can be easily sealed regardless of the thickness of the electrode assembly 20. Note that, for reducing a dead space between the electrode assembly 20 and the outer package film 50 in order to improve the volume energy density of the electrical storage device 10, it is preferable that the outer package film 50 is wound in a state of being in contact with the outer surface of the electrode assembly 20. In an all-solid-state battery, it is necessary to eliminate the space between the electrode assembly 20 and the outer package film 50 from the viewpoint that it is necessary to uniformly apply a high pressure from the outer surface of the battery for exhibiting battery performance, and therefore, the state where the outer package film 50 is in contact with and is wound around the outer surface of the electrode assembly 20 is preferable.

As shown in Fig. 2, the outer package film 50 is, for example, a laminate (laminate film) including a base material layer 51, a barrier layer 52, and a heat-sealable resin layer 53 in the stated order. Note that the outer package film 50 is not required to include all these layers, and may be free of, for example, the barrier layer 52. In other words, the outer package film 50 is only required to be formed from a material that is flexible and easy to bend, and the outer package film 50 may be formed from, for example, a resin film. Note that the outer package film 50 is preferably heat-sealable. In the outer package film 50, the innermost layer and the outermost layer may be the heat-sealable resin layers 53. In this case, the outer package film 50 may wrap the electrode assembly 20 and the lid 60 by the outermost layer and the innermost layer being joined to each other.

The base material layer 51 included in the outer package film 50 is a layer for imparting heat resistance to the outer package film 50 to suppress generation of pinholes which may occur during processing or distribution. The base material layer 51 includes, for example, at least one layer of a stretched polyester resin layer and a stretched polyamide resin layer. For example, by the base material layer 51 including at least one layer of a stretched polyester resin layer and a stretched polyamide resin layer, the barrier layer 52 can be protected during processing of the outer package film 50 to suppress breakage of the outer package film 50. From the viewpoint of increasing the tensile elongation of the outer package film 50, the stretched polyester resin layer is preferably a biaxially stretched polyester resin layer, and the stretched polyamide resin layer is preferably a biaxially stretched polyamide resin layer. Further, from the viewpoint of excellent piercing strength or impact strength, the stretched polyester resin layer is more preferably a biaxially stretched polyethylene terephthalate (PET) film, and the stretched polyamide resin layer is more preferably a biaxially stretched nylon (ONy) film. Note that the base material layer 51 may include both a stretched polyester resin layer and a stretched polyamide resin layer. From the viewpoint of film strength, the thickness of the base material layer 51 is, for example, preferably 5 µm to 300 µm, more preferably 5 µm to 150 µm.

The barrier layer 52 is a layer which suppresses at least ingress of moisture. The barrier layer 52 is joined to, for example, the base material layer 51 with an adhesive layer 54 interposed therebetween. Examples of the barrier layer 52 include metal foils, deposited films, and resin layers having a barrier property. Examples of the deposited film include metal deposited films, inorganic oxide deposited films and carbon-containing inorganic oxide deposited films, and examples of the resin layer include those of polyvinylidene chloride, fluorine-containing resins such as polymers containing chlorotrifluoroethylene (CTFE) as a main component, polymers containing tetrafluoroethylene (TFE) as a main component, polymers having a fluoroalkyl group, and polymers containing a fluoroalkyl unit as a main component, and ethylene vinyl alcohol copolymers. Examples of the barrier layer 52 include resin films provided with at least one of these deposited films and resin layers. A plurality of barrier layers 52 may be provided. Preferably, the barrier layer 52 includes a layer formed from a metal material. Specific examples of the metal material constituting the barrier layer 52 include aluminum alloys, stainless steel, titanium steel and steel sheets, and in a case where the metal material is used as a metal foil, it is preferable that the metal material includes at least one of an aluminum alloy foil and a stainless steel foil.

In the barrier layer 52, the layer formed from the metal material described above may contain a recycled metal material. Examples of the recycled metal material include recycled materials of an aluminum alloy, stainless steel, titanium steel, and a steel plate. These recycled materials can be each obtained by a known method. The recycled material of the aluminum alloy can be obtained by, for example, a manufacturing method described in International Publication No. WO 2022/092231. The barrier layer 52 may be formed only from a recycled material, or may be formed from a mixed material of a recycled material and a virgin material. Note that the recycled metal material is a metal material obtained by, for example, collecting, isolating and purifying various products used in a so-called commercial market, wastes from manufacturing processes, and the like, such that the material can be reused. The virgin material from a metal material is a new metal material obtained by refining a metal natural resource (raw material), which is not a recycled material.

The aluminum alloy foil is more preferably a soft aluminum alloy foil formed from, for example, an annealed aluminum alloy from the viewpoint of improving the moldability or followability of the outer package film 50, and is preferably an aluminum alloy foil containing iron from the viewpoint of further improving the moldability or the followability. In the aluminum alloy foil containing iron (100 mass%), the content of iron is preferably 0.1 to 9.0 mass%, more preferably 0.5 to 2.0 mass%. By the content of iron being 0.1 mass% or more, it is possible to obtain the outer package film 50 having more excellent moldability. By the content of iron being 9.0 mass% or less, it is possible to obtain the outer package film 50 having more excellent flexibility. If necessary, silicon, magnesium, copper, manganese or the like may be added. Softening can be performed by annealing or the like. From the viewpoint of improving mechanical strength of the outer package film 50, the aluminum alloy foil is more preferably a hard aluminum alloy foil formed from, for example, a work-hardened aluminum alloy.

Examples of the stainless steel foil include austenitic stainless steel foils, ferritic stainless steel foils, austenitic/ferritic stainless steel foils, martensitic stainless steel foils, and precipitation-hardened stainless steel foils. From the viewpoint of providing the outer package film 50 having further excellent moldability, it is preferable that the stainless steel foil is formed from austenitic stainless steel.

Specific examples of the austenitic stainless steel constituting the stainless steel foil include SUS304, SUS301, and SUS316L, and among these, SUS304 is especially preferable.

In a case where the barrier layer 52 is a metal foil, it is only necessary for the barrier layer 52 to exhibit a function as a barrier layer suppressing at least ingress of moisture, and the barrier layer 52 has a thickness of, for example, about 9 µm to 200 µm. The thickness of the barrier layer 52 is preferably about 85 µm or less, more preferably about 50 µm or less, still more preferably about 40 µm or less, particularly preferably about 35 µm or less. Also, the thickness of the barrier layer 52 is preferably about 9.0 µm or more, more preferably about 20 µm or more, still more preferably about 25 µm or more. The thickness of the barrier layer 52 is preferably in the range of about 9.0 to 85 µm, about 9.0 to 50 µm, about 9.0 to 40 µm, about 9.0 to 35 µm, about 20 to 85 µm, about 20 to 50 µm, about 20 to 40 µm, about 20 to 35 µm, about 25 to 85 µm, about 25 to 50 µm, about 25 to 40 µm, or about 25 to 35 µm. In a case where the barrier layer 52 is formed from an aluminum alloy foil, the thickness thereof is especially preferably in above-described range. From the viewpoint of imparting high moldability and high rigidity to the outer package film 50, the thickness of the barrier layer 52 is preferably about 35 µm or more, more preferably about 45 µm or more, still more preferably about 50 µm or more, still more preferably about 55 µm or more, and preferably about 200 µm or less, more preferably about 85 µm or less, still more preferably about 75 µm or less, still more preferably about 70 µm or less, and is preferably in the range of about 35 to 200 µm, about 35 to 85 µm, about 35 to 75 µm, about 35 to 70 µm, about 45 to 200 µm, about 45 to 85 µm, about 45 to 75 µm, about 45 to 70 µm, about 50 to 200 µm, about 50 to 85 µm, about 50 to 75 µm, about 50 to 70 µm, about 55 to 200 µm, about 55 to 85 µm, about 55 to 75 µm, or about 55 to 70 µm. By the outer package film 50 having high moldability, deep drawing molding can be facilitated, which contributes to an increase in capacity of the electrical storage device. Although the weight of the electrical storage device increases when the capacity of the electrical storage device is increased, enhancement of the rigidity of the outer package film 50 can contribute to high sealing performance of the electrical storage device. In particular, when the barrier layer 52 is formed from a stainless steel foil, the thickness of the stainless steel foil is preferably about 60 µm or less, more preferably about 50 µm or less, still more preferably about 40 µm or less, still more preferably about 30 µm or less, particularly preferably about 25 µm or less. The thickness of the stainless steel foil is preferably about 10 µm or more, more preferably about 15 µm or more. The thickness of the stainless steel foil is preferably in the range of about 10 µm to 60 µm, about 10 µm to 50 µm, about 10 µm to 40 µm, about 10 µm to 30 µm, about 10 µm to 25 µm, about 15 µm to 60 µm, about 15 µm to 50 µm, about 15 µm to 40 µm, about 15 µm to 30 µm, or about 15 µm to 25 µm.

In a case where the barrier layer 52 is an aluminum foil, it is preferable that a corrosion-resistant film is provided at least on a surface on a side opposite to the base material layer 51 for prevention of dissolution, corrosion, and the like. The barrier layer 52 may include a corrosion-resistant film on each of both surfaces. Here, the corrosion-resistant film refers to a thin film obtained by subjecting the surface of the barrier layer 52 to, for example, hydrothermal denaturation treatment such as boehmite treatment, chemical conversion treatment, anodization treatment, plating treatment with nickel, chromium or the like, or corrosion prevention treatment by applying a coating agent to impart corrosion resistance (for example, acid resistance and alkali resistance) to the barrier layer 52. Specifically, the corrosion-resistant film means a film which improves the acid resistance of the barrier layer 52 (acid-resistant film), a film which improves the alkali resistance of the barrier layer 52 (alkali-resistant film), or the like. One of treatments for forming the corrosion-resistant film may be performed, or two or more kinds thereof may be performed in combination. Not only one layer but also multiple layers can be formed. Further, of these treatments, the hydrothermal denaturation treatment and the anodization treatment are treatments in which the surface of the metal foil is dissolved with a treatment agent to form a metal compound excellent in corrosion resistance. Note that the definition of the chemical conversion treatment may include these treatments. In a case where the barrier layer 52 is provided with the corrosion-resistant film, the barrier layer 52 is regarded as including the corrosion-resistant film.

The corrosion-resistant film exhibits the effects of preventing delamination between the barrier layer 52 (e.g. an aluminum alloy foil) and the base material layer 51 during molding of the outer package film 50; preventing dissolution and corrosion of the surface of the barrier layer 52, particularly dissolution and corrosion of aluminum oxide present on the surface of the barrier layer 52 when the barrier layer 52 is an aluminum alloy foil, by hydrogen fluoride generated by reaction of an electrolyte with moisture; improving the bondability (wettability) of the surface of the barrier layer 52; preventing delamination between the base material layer 51 and the barrier layer 52 during heat-sealing; and preventing delamination between the base material layer 51 and the barrier layer 52 during molding.

The heat-sealable resin layer 53 is joined to, for example, the barrier layer 52 with an adhesive layer 55 interposed therebetween. The heat-sealable resin layer 53 included in the outer package film 50 is a layer that imparts a sealing property to the outer package film 50 by heat sealing. Examples of the heat-sealable resin layer 53 include resin films formed of a polyester-based resin such as a polyethylene terephthalate-based resin or a polybutylene terephthalate-based resin, a polyolefin-based resin such as a polyethylene-based resin or a polypropylene-based resin, or an acid-modified polyolefin-based resin obtained by graft-modifying the polyolefin-based resin with an acid such as maleic anhydride. From the viewpoint of sealability and strength, the thickness of the heat-sealable resin layer 53 is, for example, preferably 20 µm to 300 µm, more preferably 40 µm to 150 µm.

The outer package film 50 preferably includes one or more layers having a buffer function (hereinafter, referred to as "buffer layers") outside the heat-sealable resin layer 53, more preferably outside the barrier layer 52. The buffer layer may be laminated outside the base material layer 51, and the base material layer 51 may also function as a buffer layer. In a case where the outer package film 50 includes a plurality of buffer layers, the plurality of buffer layers may lie side-by-side, or may be laminated with the base material layer 51, the barrier layer 52, or the like interposed between the buffer layers.

The material constituting the buffer layer can be arbitrarily selected from materials having a cushioning property. The material having a cushioning property is, for example, rubber, a nonwoven fabric, or a foamed sheet. The rubber is, for example, natural rubber, fluororubber, or silicone rubber. The rubber hardness is preferably about 20 to 90. The material constituting a nonwoven fabric is preferably a material having excellent heat resistance. In a case where the buffer layer is formed from a nonwoven fabric, the lower limit of the thickness of the buffer layer is preferably 100 µm, still more preferably 200 µm, still more preferably 1000 µm. In a case where the buffer layer is formed from a nonwoven fabric, the upper limit of the thickness of the buffer layer is preferably 5000 µm, still more preferably 3000 µm. The thickness of the buffer layer is preferably in the range of 100 µm to 5000 µm, 100 µm to 3000 µm, 200 µm to 5000 µm, 200 µm to 3000 µm, 1000 µm to 5000 µm, or 1000 µm to 3000 µm. The thickness of the buffer layer is most preferably in the range of 1000 µm to 3000 µm among these.

In a case where the buffer layer is formed from rubber, the lower limit of the thickness of the buffer layer is preferably 0.5 mm. In a case where the buffer layer is formed from rubber, the upper limit of the thickness of the buffer layer is preferably 10 mm, still more preferably 5 mm, still more preferably 2 mm. In a case where the buffer layer is formed from rubber, the thickness of the buffer layer is preferably in the range of 0.5 mm to 10 mm, 0.5 mm to 5 mm, or 0.5 mm to 2 mm.

In a case where the outer package film 50 includes a buffer layer, the buffer layer functions as a cushion, so that breakage of the outer package film 50 due to the impact of falling of the electrical storage device 10 or handling during manufacturing of the electrical storage device 10 is suppressed.

As shown in Figs. 5 and 6, the lid 60 has, for example, a cuboid shape as a whole. The lid 60 includes the lid main body 70 containing a metal material, and a cover 80 that contains a resin material and covers a part of the lid main body 70. The lid 60 can be manufactured, for example, by injection molding the cover 80 with respect to the lid main body 70.

The metal material constituting the lid main body 70 can be arbitrarily selected. The metal material constituting the lid main body 70 is, for example, aluminum, an aluminum alloy, nickel, copper, or a copper alloy. For example, in a case where the electrode assembly 20 is a lithium ion battery, the lid main body 70 connected to the positive electrode is preferably formed from aluminum or an aluminum alloy. The lid main body 70 connected to the negative electrode is preferably formed from nickel, copper, or a copper alloy. The material constituting the lid main body 70 connected to the negative electrode may be copper plated with nickel. The material constituting the lid main body 70 may include a recycled metal material. The lid main body 70 has a base portion 71 and a cover portion 72.

The lid main body 70 is formed from a metal material. Here, "formed from a metal material" means that the content of the metal material is 50 mass% or more, preferably 80 mass% or more, more preferably 90 mass% or more, and still more preferably 95 mass% or more when the total amount of materials constituting the lid main body 70 is defined as 100 mass%. In other words, the materials constituting the lid main body 70 can contain materials other than the metal material in addition to the metal material.

When the lid main body 70 contains a metal material, the lid main body 70 preferably has the corrosion-resistant film described in the barrier layer 52. The lid 60 may include at least one of an adhesive film and an adhesive layer for suitably joining the lid main body 70 and the cover 80 to each other. The adhesive film or the adhesive layer may be a single layer or a multilayer, and preferably contains a resin material having at least a polar group. The adhesive layer can be formed by dip coating, a dispenser, inkjet, spraying, screen printing, or the like.

The base portion 71 shown in Figs. 7 and 8 has, for example, a rectangular plate shape and has a first surface 71A and a second surface 71B. The first surface 71A faces the electrode assembly 20. The second surface 71B is a surface on a side opposite to the first surface 71A. From the viewpoint of suitably constraining the end part 31 (see Fig. 9) of the current collector 30 and from the viewpoint of shortening the distance between the electrode assembly 20 and the lid 60 to improve the volume density, it is preferable that a housing portion 71X that houses the end part 31 of the current collector 30 is formed in the base portion 71.

The shape of the housing portion 71X can be arbitrarily selected as long as it can house at least the end part 31 of the current collector 30. In the present embodiment, the housing portion 71X is a recessed portion that is recessed from the first surface 71A toward the second surface 71B. The housing portion 71X does not penetrate the lid main body 70. The opening of the housing portion 71X faces the electrode assembly 20. The bottom portion of the housing portion 71X protrudes outward from the second surface 71B. The housing portion 71X extends in the LR direction. The number of the housing portions 71X formed in the base portion 71 can be arbitrarily selected. In the example shown in Fig. 8, two housing portions 71X are formed in the base portion 71. The two housing portions 71X are arranged in the UD direction. One or three or more housing portions 71X may be formed in the base portion 71. The end part 31 of the current collector 30 is joined to an arbitrary portion inside the housing portion 71X by ultrasonic welding or laser welding, for example. The end part 31 of the current collector 30 and the housing portion 71X may be joined by screw fixing, press fitting, shrink fitting, caulking welding, pressure welding, brazing, or an adhesive. When the end part 31 of the current collector 30 and the housing portion 71X are joined by an adhesive, the end part 31 of the current collector 30 and the housing portion 71X may have conductivity in at least one of a portion joined by the adhesive and a portion other than the portion joined by the adhesive. In the present embodiment, since the lid main body 70 contains a metal material, the lid main body 70 has a function as an electrode terminal. As such, the electrical storage device 10 has fewer constituent elements than the conventional electrical storage device. In the lid main body 70, for example, an electrode terminal may be joined to the bottom portion of the housing portion 71X or the like.

The cover portion 72 is covered with the cover 80. The cover portion 72 has a frame shape standing from the first surface 71A of the base portion 71. The cover portion 72 has a first cover portion 72A, a second cover portion 72B, a third cover portion 72C, and a fourth cover portion 72D. The first cover portion 72A forms the upper surface of the lid main body 70. The first cover portion 72A extends in a first direction (LR direction in the present embodiment) in front view of the lid main body 70. The second cover portion 72B and the third cover portion 72C are connected to the first cover portion 72A and form the lateral surfaces of the lid main body 70. The second cover portion 72B and the third cover portion 72C extend in a second direction (UD direction in the present embodiment) crossing the first direction in front view of the lid main body 70. In the present embodiment, the first direction and the second direction orthogonally cross each other in front view of the lid main body 70. The first direction and the second direction are not required to orthogonally cross each other in front view of the lid main body 70. The fourth cover portion 72D forms the lower surface of the lid main body 70. The fourth cover portion 72D extends in the first direction (LR direction in the present embodiment) in front view of the lid main body 70.

At least a part of a front surface 72X of the cover portion 72 is covered with the cover 80. In the present embodiment, the entire front surface 72X of the cover portion 72 is covered with the cover 80. In order to increase the joining strength between the lid main body 70 and the cover 80, at least a part of a back surface 72Y of the cover portion 72 is preferably covered with the cover 80. In other words, the cover portion 72 is preferably covered such that the front surface 72X and the back surface 72Y are sandwiched by the cover 80. In the present embodiment, the entire back surface 72Y is covered with the cover 80.

In order to further increase the joining strength between the lid main body 70 and the cover 80, it is preferable that a through-hole 72Z is formed in the cover portion 72. The shape of the through-hole 72Z in plan view can be arbitrarily selected. In the present embodiment, the shape of the through-hole 72Z in plan view is a rectangle. The shape of the through-hole 72Z in plan view may be a circle, an ellipse, a square, or a polygon. In a case where the front surface 72X and the back surface 72Y of the cover portion 72 are covered with the cover 80, the cover 80 covering the front surface 72X of the cover portion 72 and the cover 80 covering the back surface 72Y of the cover portion 72 are connected via the cover 80 existing in the through-hole 72Z. Therefore, the joining strength between the lid main body 70 and the cover 80 can be further enhanced. The number of the through-holes 72Z formed in the cover portion 72 can be arbitrarily selected. In the example shown in Fig. 7, five through-holes 72Z are formed in each of the first cover portion 72A, the second cover portion 72B, the third cover portion 72C, and the fourth cover portion 72D. One to four or six or more through-holes 72Z may be formed in each of the first cover portion 72A, the second cover portion 72B, the third cover portion 72C, and the fourth cover portion 72D. The numbers of the through-holes 72Z formed in the first cover portion 72A, the second cover portion 72B, the third cover portion 72C, and the fourth cover portion 72D may be different from each other. The through-hole 72Z is not required to be formed in a part of the first cover portion 72A, the second cover portion 72B, the third cover portion 72C, and the fourth cover portion 72D.

The cover 80 shown in Fig. 4 has a lid seal portion 81. The lid seal portion 81 is heat-sealed with the heat-sealable resin layer 53 of the outer package film 50. The lid seal portion 81 includes a first seal surface 81A, a second seal surface 81B, a third seal surface 81C, and a fourth seal surface 81D. The first seal surface 81A forms the upper surface of the lid 60. The first seal surface 81A extends in a first direction (LR direction in the present embodiment) in front view of the lid 60. The second seal surface 81B and the third seal surface 81C are connected to the first seal surface 81A and form the lateral surfaces of the lid 60. The second seal surface 81B and the third seal surface 81C extend in a second direction (UD direction in the present embodiment) crossing the first direction in front view of the lid 60. In the present embodiment, the first direction and the second direction orthogonally cross each other in front view of the lid 60. The first direction and the second direction are not required to orthogonally cross each other in front view of the lid 60. The fourth seal surface 81D forms the lower surface of the lid 60. The fourth seal surface 81D extends in the first direction (LR direction in the present embodiment) in front view of the lid 60.

In a case where the lid 60 has a plate shape, the lid 60 is preferably thick to some extent to suppress deformation of the outer packaging 40 even in a case where electrical storage devices 10 are stacked on one another. From another viewpoint, in a case where the lid 60 has a plate shape, the lid seal portion 81 of the lid 60 is preferably thick to some extent such that the lid seal portion 81 of the lid 60 and the outer package film 50 can be suitably heat-sealed when the second seal portion 92 described later is formed. The minimum value of the thickness of the lid seal portion 81 of the lid 60 is, for example, 1.0 mm, more preferably 3.0 mm, still more preferably 4.0 mm. The maximum value of the thickness of the lid seal portion 81 of the lid 60 is, for example, 20 mm, more preferably 15 mm, still more preferably 10 mm. The maximum value of the thickness of the lid seal portion 81 of the lid 60 may be 20 mm or more. The thickness of the lid seal portion 81 of the lid 60 is preferably in the range of 1.0 mm to 20 mm, 1.0 mm to 15 mm, 1.0 mm to 10 mm, 3.0 mm to 20 mm, 3.0 mm to 15 mm, 3.0 mm to 10 mm, 4.0 mm to 20 mm, 4.0 mm to 15 mm, or 4.0 mm to 10 mm. In the present embodiment, in a case where the lid 60 is described as having a plate shape, an aspect in which the lid 60 is formed only from the film specified by Japanese Industrial Standard (JIS), [Packaging Terminology] Standard is not included. Note that the thickness of the lid seal portion 81 of the lid 60 may vary depending on a portion of the lid 60. In a case where the thickness of the lid seal portion 81 of the lid 60 varies depending on a portion, the thickness of the thickest portion is defined as the thickness of the lid seal portion 81 of the lid 60.

The lid seal portion 81 further includes boundaries 82, 83, 84, and 85. The boundary 82 is a boundary between the first seal surface 81A and the second seal surface 81B. The boundary 83 is a boundary between the first seal surface 81A and the third seal surface 81C. The boundary 84 is a boundary between the fourth seal surface 81D and the second seal surface 81B. The boundary 85 is a boundary between the fourth seal surface 81D and the third seal surface 81C. The shapes of the boundaries 82 to 85 may be angular, or may be rounded off by R processing. In the present embodiment, the boundaries 82 to 85 are angular.

The cover 80 is formed from a resin material. Here, "formed from a resin material" means that the content of the resin material is 50 mass% or more, preferably 80 mass% or more, more preferably 90 mass% or more, and still more preferably 95 mass% or more when the total amount of materials constituting the cover 80 is defined as 100 mass%. In other words, the materials constituting the cover 80 can contain materials other than the resin material in addition to the resin material.

Specific examples of the resin include resins such as polyester, polyolefin, polyamide, an epoxy resin, an acrylic resin, a fluororesin, polyurethane, a silicone resin, and a phenol resin, and thermoplastic resins such as modified products of these resins. The resin material may be a mixture of these resins, a copolymer of these resins, or a modified product of the copolymer. Among them, the resin material is preferably a heat-sealable resin such as polyester or polyolefin, and more preferably polyolefin. In a case where the resin material is a resin, the cover 80 may be molded by any molding method.

The resin material contained in the material constituting the cover 80 is preferably an olefin-based random copolymer, more preferably contains a resin containing a polyolefin backbone as a main component, still more preferably contains a polyolefin as a main component, and still more preferably contains polypropylene as a main component. The polyolefin may be an acid-modified polyolefin. The resin material contained in the material constituting the cover 80 preferably contains a plurality of kinds of amide-based lubricants. In the resin material contained in the material constituting the cover 80, it is preferable that the plurality of amide-based lubricants further contain an unsaturated fatty acid amide in addition to the saturated fatty acid amide. The resin material contained in the material constituting the cover 80 may be a polyolefin resin to which a propylene-based elastomer having a melting point higher than 150°C is added.

Specific examples of the polyester include polyethylene terephthalate, polybutylene terephthalate, polyethylene naphthalate, polybutylene naphthalate, polyethylene isophthalate, and copolyesters. Examples of the copolyester include copolyesters having ethylene terephthalate as a main repeating unit. Specific examples thereof include copolymer polyesters that are polymerized with ethylene isophthalate and include ethylene terephthalate as a main repeating unit (hereinafter, abbreviated as follows after polyethylene(terephthalate/isophthalate)), polyethylene(terephthalate/adipate), polyethylene(terephthalate/sodium sulfoisophthalate), polyethylene(terephthalate/sodium isophthalate), polyethylene (terephthalate/phenyl-dicarboxylate), and polyethylene(terephthalate/decane dicarboxylate). Among these, the resin material is preferably polybutylene terephthalate from the viewpoint of enhancing heat resistance and pressure resistance.

Specific examples of polyolefin include polyethylenes such as low-density polyethylene, medium-density polyethylene, high-density polyethylene and linear low-density polyethylene; ethylene-α-olefin copolymers; polypropylene such as homopolypropylene, block copolymers of polypropylene (for example, block copolymers of propylene and ethylene) and random copolymers of polypropylene (for example, random copolymers of propylene and ethylene); propylene-α-olefin copolymers; and terpolymers of ethylene-butene-propylene. The polyolefin resin in the case of a copolymer may be a block copolymer or a random copolymer. Among them, the resin material is preferably polypropylene because it is excellent in heat-sealability and electrolytic solution resistance.

The resin as the resin material may contain a filler as necessary. Specific examples of the filler include glass beads, graphite, glass fiber, and carbon fiber. By the resin as the resin material containing the filler, deformation resistance of the cover 80 against a temperature change can be improved.

The melt mass flow rate of the resin material contained in the material constituting the cover 80 is preferably in the range of 1 g/10 min to 100 g/10 min, and more preferably in the range of 5 g/10 min to 80 g/10 min. The melt mass flow rate is measured on the basis of JIS K7210-1:2014.

In the present embodiment, surfaces of the outer package film 50 which face each other (heat-sealable resin layer 53) are heat-sealed in a state where the outer package film 50 is wrapped around the electrode assembly 20 to have the opening part 40A to thereby form a first seal portion 91.

The first seal portion 91 is formed by heat-sealing a portion including a first edge 50A and a portion including a second edge 50B in the outer package film 50 shown in Fig. 3. The first seal portion 91 extends in a longitudinal direction (FB direction) of the outer packaging 40. In the outer packaging 40, a position at which the first seal portion 91 is formed can be arbitrarily selected. In the present embodiment, a root 91X of the first seal portion 91 is preferably located on an edge 43 of a boundary between a first surface 41 and a second surface 42 of the outer packaging 40. The first surface 41 has a larger area than the second surface 42. The root 91X of the first seal portion 91 may be located on an arbitrary surface of the outer packaging 40. In the present embodiment, the first seal portion 91 protrudes further outward than the electrode assembly 20 in plan view. The first seal portion 91 may be folded toward the second surface 42 of the outer packaging 40, or may be folded toward the first surface 41, for example.

In the present embodiment, the second seal portion 92 is formed by heat-sealing the heat-sealable resin layer 53 of the outer package film 50 and the lid seal portion 81 of the lid 60. Hereinafter, the sealing strength between the heat-sealable resin layer 53 of the outer package film 50 and the lid seal portion 81 of the lid 60 may be referred to as sealing strength of the second seal portion 92. The sealing strength of the second seal portion 92 is the sealing strength between the heat-sealable resin layer 53 and the lid 60 in the long-side portion of the lid seal portion 81, that is, the lid seal portion 81 extending in the LR (width) direction in Fig. 1A.

The sealing strength of the second seal portion 92 is measured as follows. First, a notch is formed at a part of the outer package film 50 constituting the first surface 41 of the outer packaging 40, and three strip-shaped members 41X, 41Y, and 41Z (see the two-dotted chain line in Fig. 1B) aligned in the LR direction are formed. The widths of the three strip-shaped members 41X, 41Y, and 41Z in the LR direction are 15 mm. End parts of the strip-shaped members 41X, 41Y, and 41Z are joined to the lid 60 at the second seal portion 92. The length of the lid 60 in the LR direction is 45 mm or more. Next, the sealing strength of each of the strip-shaped members 41X, 41Y, and 41Z is measured by pulling the end part opposite to the end parts of the strip-shaped members 41X, 41Y, and 41Z joined to the lid 60 upward in the UD direction (direction opposite to the first surface 41B). The distance between chucks in the UD direction is 10 mm. The sealing strength of each of the strip-shaped members 41X, 41Y, and 41Z is a peak value of the sealing strength of each of the strip-shaped members 41X, 41Y, and 41Z. In the present embodiment, the sealing strength of the second seal portion 92 is an average value of the sealing strengths of the strip-shaped members 41X, 41Y, and 41Z. In a case where the length of the lid 60 in the LR direction is less than 45 mm, three strip-shaped members having an arbitrary width X mm, which is less than 15 mm, are formed, and the sealing strength of the three strip-shaped members is measured by a method similar to that adopted when the length of the lid 60 in the LR direction is 45 mm or more. Each obtained sealing strength is divided by an arbitrary width X mm and multiplied by 15 to be converted into the sealing strength of the three strip-shaped members at the width of 15 mm. The sealing strength of the second seal portion 92 is an average value of the sealing strengths of the three strip-shaped members converted into a width of 15 mm. Note that the sealing strength of the second seal portion 92 in a case where the lid 60 is divided into a plurality of parts including long sides and short sides is the sealing strength at the long-side portion of the lid seal portion 81 of the plurality of parts.

From the viewpoint of suitably maintaining the state where the electrode assembly 20 is sealed with the outer packaging 40, the sealing strength of the second seal portion 92 is preferably 40 N/15 mm or more, more preferably 50 N/15 mm or more, still more preferably 60 N/15 mm or more, still more preferably 70 N/15 mm or more, still more preferably 85 N/15 mm or more. In a case where the sealing strength of the second seal portion 92 is 40 N/15 mm or more, the state where the electrode assembly 20 is sealed with the outer packaging 40 is suitably maintained even when the electrical storage device 10 is used for, for example, several years (less than 10 years). In a case where the sealing strength of the second seal portion 92 is 85 N/15 mm or more, the state where the electrode assembly 20 is sealed with the outer packaging 40 is suitably maintained even when the electrical storage device 10 is used for, for example, 10 years or more. The sealing strength of the second seal portion 92 is preferably 300 N/15 mm or less. The sealing strength of the second seal portion 92 is preferably in the range of 40 N/15 mm to 300 N/15 mm, 50 N/15 mm to 300 N/15 mm, 60 N/15 mm to 300 N/15 mm, 70 N/15 mm to 300 N/15 mm, or 85 N/15 mm to 300 N/15 mm.

In the present embodiment, the lid 60 preferably has a protrusion 86 protruding from the lid seal portion 81 so that a gap is hardly formed between the outer package film 50 and the lid 60. The protrusion 86 may be formed integrally with the cover 80, or may be formed separately from the cover 80 and joined to the cover 80. In the present embodiment, the protrusion 86 is formed integrally with the cover 80. In the lid seal portion 81, a position at which the protrusion 86 is formed can be arbitrarily selected. A gap between the outer package film 50 and the lid 60 is likely to be formed, for example, between the root 91X of the first seal portion 91 and the lid 60. In particular, in a case where the root 91X of the first seal portion 91 is located at the boundaries 82 to 85 of the lid 60, ease of filling resin between the root 91X of the first seal portion 91 and the lid 60 is likely to deteriorate. Therefore, it is preferable that the protrusion 86 is formed at a position at which the root 91X of the first seal portion 91 is located in the lid seal portion 81. In the present embodiment, the root 91X of the first seal portion 91 is located at the boundary 82 of the lid 60. Therefore, it is preferable that the protrusion 86 is formed at the boundary 82 in the lid seal portion 81. In the present embodiment, the first seal portion 91 is sealed with the protrusion 86 sandwiched therein. Note that the protrusion 86 may be formed on at least one of the first seal surface 81A, the second seal surface 81B, the third seal surface 81C, the fourth seal surface 81D, the boundary 83, the boundary 84, and the boundary 85.

The shape of the protrusion 86 can be arbitrarily selected. In the present embodiment, the protrusion 86 has a plate shape. The thickness of the protrusion 86 can be arbitrarily selected. In the present embodiment, the thickness of the protrusion 86 decreases with increasing distance from the boundary 82. In other words, the protrusion 86 is tapered with increasing distance from the boundary 82. The thickness of the protrusion 86 may be constant, or may increase with increasing distance from the boundary 82.

A direction in which the protrusion 86 extends can be arbitrarily selected. In the present embodiment, the protrusion 86 extends along the first direction (LR direction in the present embodiment). The protrusion 86 may extend along the second direction (UD direction in the present embodiment). The protrusion 86 may extend in the first direction (LR direction in the embodiment) and a third direction crossing the second direction (UD direction in the embodiment) in front view of the lid 60.

The length of the protrusion 86 can be arbitrarily selected as long as it is equal to or less than the length of the first seal portion 91. For example, the length of the protrusion 86 may be substantially equal to the length of the first seal portion 91, or may be 30% to 50% of the length of the first seal portion 91.

### <1-2. Method for manufacturing electrical storage device>

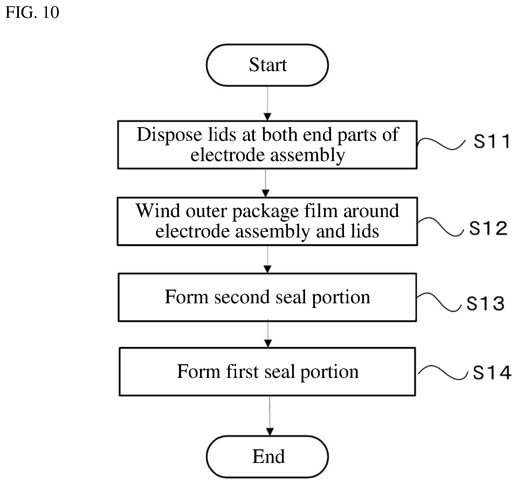

Fig. 10 is a flowchart showing an example of a method for manufacturing the electrical storage device 10. The method for manufacturing the electrical storage device 10 includes, for example, a first step, a second step, a third step, and a fourth step. The first to fourth steps are carried out by, for example, a manufacturing apparatus of the electrical storage device 10. At least a part of the first to fourth steps may be carried out by an operator. Note that the first to fourth steps are merely convenient labels for the steps in the method for manufacturing the electrical storage device 10 and do not necessarily mean the order of the steps.

In the first step of Step S11, the manufacturing apparatus disposes the lids 60 at both end parts of the electrode assembly 20, and connects the end parts 31 of the current collector 30 and the lid main bodies 70 of the lids 60. When the first step is completed, the lid 60 functioning as an electrode terminal and the electrode of the electrode assembly 20 are electrically connected.

The second step in Step S12 is carried out later than the first step. In the second step, the manufacturing apparatus winds the outer package film 50 around the electrode assembly 20 and the lid 60 with tension applied to the outer package film 50 while restricting the movement of the electrode assembly 20 and the lid 60 by a restriction means. The restriction means is, for example, a groove into which the electrode assembly 20 and the lid 60 are fitted. The restriction means may be an apparatus that applies an external force to the electrode assembly 20 and the lid 60 so that the electrode assembly 20 and the lid 60 do not move. The restriction means may be an apparatus that applies a force to the electrode assembly 20 and the lid 60 in a direction opposite to a direction in which the outer package film 50 is pulled. Note that the restriction means may include a roller for removing wrinkles of the outer package film 50 by running on the outer package film 50 with the outer package film 50 being pulled.

The third step in Step S13 is carried out later than the second step. The manufacturing apparatus forms the second seal portion 92 by heat-sealing the outer package film 50 and the lid 60.

The fourth step in Step S14 is carried out earlier or later than the third step. In the fourth step, the manufacturing apparatus forms the first seal portion 91 by heat-sealing the heat-sealable resin layer 53 in a portion including the first edge 50A of the outer package film 50 and the heat-sealable resin layer 53 in a portion including the second edge 50B such that the protrusion 86 of the lid 60 is sandwiched by the outer package film 50, where the heat-sealing is performed with tension applied to the outer package film 50 while the movement of the electrode assembly 20 and the lid 60 is restricted.

### <1-3. Action and effect of electrical storage device>

According to the electrical storage device 10, since the lid main body 70 is covered with the cover 80 containing a resin material in the lid 60, the joining strength between the cover 80 and the outer package film 50 is high. Therefore, the electrode assembly 20 can be suitably sealed with the outer packaging 40.

### [2. Modifications]

The above-described embodiment is an example of possible forms of the lid, the lid main body, and the electrical storage device according to the present invention, and is not intended to limit the forms thereof. The lid, the lid main body, and the electrical storage device according to the present invention may have a form different from that exemplified in the embodiment. An example thereof is a form in which a part of the configuration of the embodiment is replaced, changed or omitted, or a form in which a new configuration is added to the embodiment. Some examples of modifications of the embodiment will be described below. Note that the following modifications can be combined as long as they are not technically contradictory.

### <2-1. First modification>

In the electrical storage device 10 of the above-described embodiment, the lid 60 is not required to have the protrusion 86. Note that the first modification can be similarly applied to the following second to eleventh modifications.

### <2-2. Second modification>

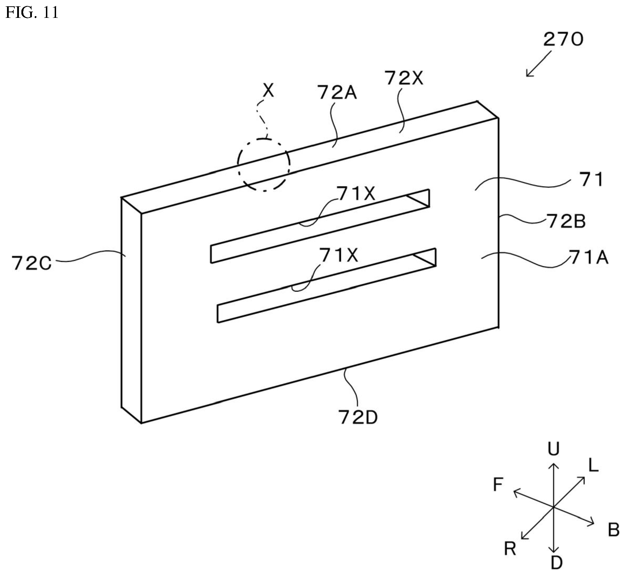

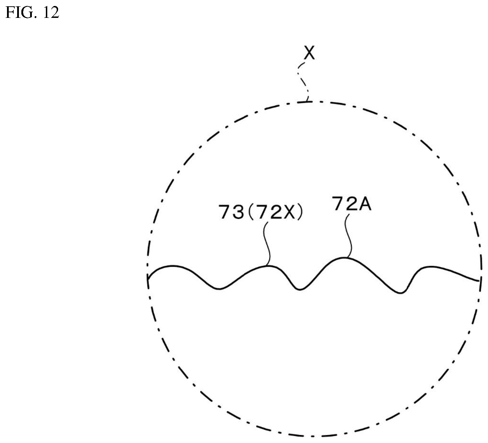

In the electrical storage device 10 of the above-described embodiment, the configuration of the lid main body 70 can be changed. Fig. 11 is a perspective view of a back side of a lid main body 270 of a second modification. Fig. 12 is an enlarged view of the X part of Fig. 11.

In the lid main body 270 of the second modification, at least a part of the through-hole 72Z may be omitted from the cover portion 72. At least a part of the cover portion 72 may include a rough surface 73. The rough surface 73 can be formed, for example, by subjecting the front surface 72X of the cover portion 72 to roughening treatment. A specific method of the roughening treatment is, for example, shot blasting treatment, polishing treatment, alumite treatment, wet etching treatment, plasma treatment, laser treatment, sandblasting treatment, or roughening plating treatment. In order to secure the joining strength between the lid main body 270 and the cover 80, the entire front surface 72X of the cover portion 72 of the lid main body 270 is preferably subjected to roughening treatment. In other words, the entire front surface 72X of the cover portion 72 is preferably the rough surface 73. As shown in Fig. 12, minute irregularities are formed on the rough surface 73. A distance between peaks of adjacent minute irregularities may be about 0.01 to 300 µm. In a case where the cover 80 is injection molded with respect to the lid main body 270, the lid main body 270 and the cover 80 are more firmly joined by an anchor effect. In order to obtain a higher anchor effect, the maximum height roughness Rz of the rough surface 73 is preferably in the range of 0.01 µm or more and 500 µm or less, and more preferably in the range of 0.5 µm or more and 200 µm or less. The maximum height roughness Rz of the rough surface 73 is measured in accordance with JIS B 0601-2001. The maximum height roughness Rz of the rough surface 73 is measured using a laser microscope VK-X3000 equipped with a white-light interferometer manufactured by

### KEYENCE CORPORATION.

In the second modification, from the viewpoint of suitably joining the lid main body 270 and the cover 80, the lid main body 270 may include at least one of an adhesive film and an adhesive layer. The adhesive film or the adhesive layer may be a single layer or a multilayer, and preferably contains a resin material having at least a polar group. The adhesive layer can be formed by dip coating, a dispenser, inkjet, spraying, screen printing, or the like.

In the second modification, the cover 80 may be joined to the lid main body 270 by insert molding, press molding, thermocompression via induction heating, laser heating, or friction stir welding. In the second modification, from the viewpoint of enhancing the adhesion between the lid main body 270 and the cover 80, at least one of the cover 80 and the rough surface 73 of the cover portion 72 may be subjected to anodization treatment or plating treatment, or a resin reactive film may be formed thereon. The rough surface 73 preferably has the corrosion-resistant film described in the barrier layer 52.

### <2-3. Third modification>

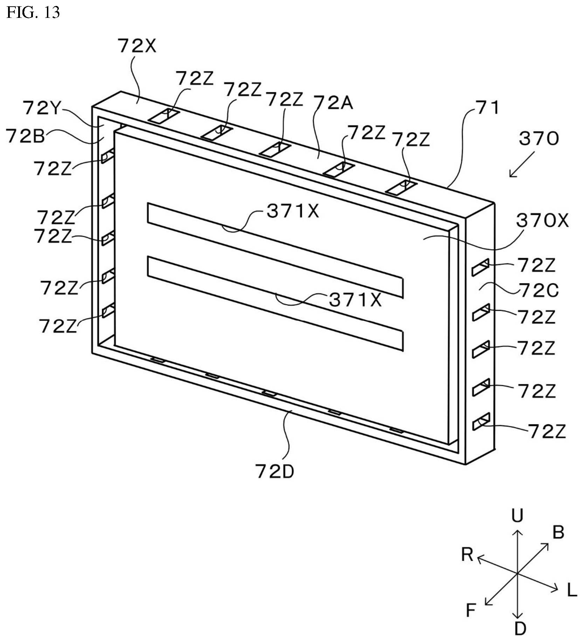

Fig. 13 is a perspective view of a front side of a lid main body 370 of a third modification. In the lid main body 370, a housing 370X having a rectangular shape may be disposed in a space surrounded by the cover portion 72. The housing 370X may be formed integrally with the base portion 71, may be configured separately from the base portion 71 and joined to the base portion 71. The lateral surface of the housing 370X faces the back surface 72Y of the cover portion 72 with a slight gap interposed therebetween. The cover 80 may be disposed in the gap between the lateral surface of the housing 370X and the back surface 72Y of the cover portion 72. A housing portion 371X may be formed in the housing 370X. In a case where the housing portion 371X is formed in the housing 370X, the lid 60 is disposed such that the opening of the housing portion 371X of the lid main body 370 faces the electrode assembly 20.

### <2-4. Fourth modification>

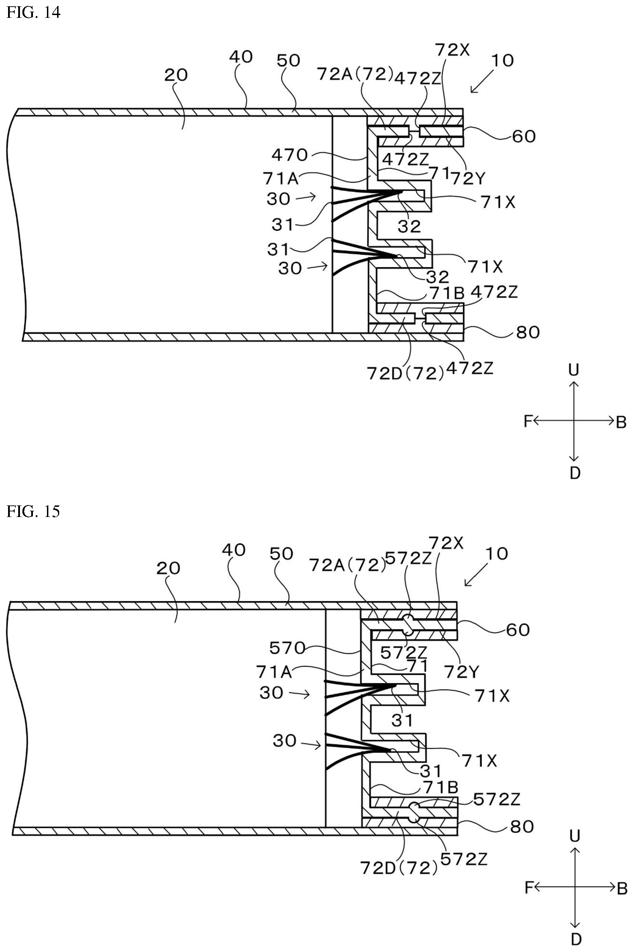

Fig. 14 is a cross-sectional view of an electrical storage device 10 including a lid main body 470 of a fourth modification. The cover portion 72 of the lid main body 470 may have a recessed portion 472Z that does not penetrate the cover portion 72 instead of or in addition to the through-hole 72Z. The recessed portion 472Z may be recessed from the front surface 72X toward the back surface 72Y, or may be recessed from the back surface 72Y toward the front surface 72X. The specifications about the number of the recessed portions 472Z formed in the cover portion 72 and the positions where the recessed portions 472Z are formed in the cover portion 72 are similar to the specifications about the through-hole 72Z. Also in the fourth modification, similarly to the second modification, the rough surface 73 may be formed on at least a part of the front surface 72X of the cover portion 72.

### <2-5. Fifth modification>

Fig. 15 is a cross-sectional view of an electrical storage device 10 including a lid main body 570 of a fifth modification. The cover portion 72 of the lid main body 570 may have a projecting portion 572Z protruding from the cover portion 72 toward the cover 80 instead of or in addition to the through-hole 72Z. The projecting portion 572Z may protrude from the front surface 72X toward the cover 80, or may protrude from the back surface 72Y toward the cover 80. The specifications about the number of the projecting portions 572Z formed in the cover portion 72 and the positions where the projecting portions 572Z are formed in the cover portion 72 are similar to the specifications about the through-hole 72Z. Also in the fifth modification, similarly to the second modification, the rough surface 73 may be formed on at least a part of the front surface 72X of the cover portion 72.

### <2-6. Sixth modification>

In the electrical storage device 10 of the above-described embodiment, the housing portion 71X may be omitted from the lid main body 70. In a sixth modification, the end part 31 of the current collector 30 may be joined to the first surface 71A of the base portion 71 of the lid main body 70, for example.

### <2-7. Seventh modification>

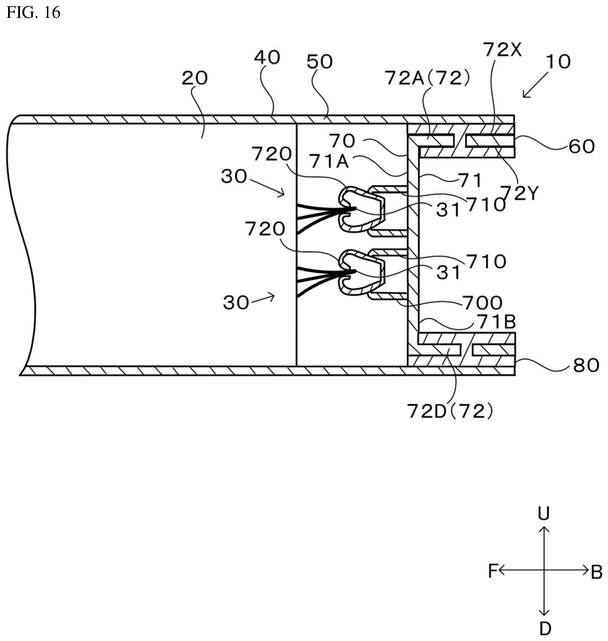

In the above-described embodiment, the configuration of the housing portion 71X can be arbitrarily changed as long as it can be connected to the end part 31 of the current collector 30. Fig. 16 is a sectional view of an electrical storage device 10 of a seventh modification. The electrical storage device 10 of the seventh modification includes a housing portion 700. The housing portion 700 is, for example, a known clip. The housing portion 700 may be a slide clip. The housing portion 700 includes a base portion 710 and a clamping portion 720. The base portion 710 is joined to the first surface 71A of the lid main body 70. The clamping portion 720 is connected to the base portion 710 and is configured to clamp a portion including the end part 31 of the current collector 30. In the seventh modification, since the current collector 30 and the lid main body 70 can be connected by clamping the portion including the end part 31 of the current collector 30 with the clamping portion 720, the electrical storage device 10 can be easily manufactured. In a case where the housing portion 700 is a slide clip, in the FB direction, the current collector 30 can be inserted into the clamping portion 720 in a direction approaching the base portion 710, and is restricted from moving in a direction separating from the base portion 710 by the clamping portion 720. Therefore, a state where the current collector 30 is clamped by the clamping portion 720 is suitably maintained.

### <2-8. Eighth modification>

In the electrical storage device 10 of the above-described embodiment, the specific method for forming the protrusion 86 of the lid 60 can be arbitrarily changed. For example, the protrusion 86 may be formed by an adhesive film or the like which is joined to the lid seal portion 81 of the lid main body 70. In this modification, for example, a plurality of adhesive films may be joined in a stacked state to the lid seal portion 81 to form the protrusion 86, or the adhesive film may be joined to the lid seal portion 81 in a flap shape to form the protrusion 86.

### <2-9. Ninth modification>

In the above-described embodiment, the outer package film 50 of the electrical storage device 10 may protrude further outward than at least one of the two lids 60 in the FB direction. The electrode assembly 20 is sealed by the part of the outer package film 50 protruding further outward than the lid 60 being closed. The part of the outer package film 50 protruding further outward than the lid 60 may be folded like a gable top pouch or a brick-shaped pouch.

### <2-10. Tenth modification>

In the above-described embodiment, the outer packaging 40 is not required to include one of the two lids 60. In this modification, the electrode assembly 20 is sealed by the part of the outer package film 50 protruding further outward than the electrode assembly 20 being closed at the part of the outer packaging 40 from which the lid 60 is omitted in the FB direction. The part of the outer package film 50 protruding further outward than the electrode assembly 20 may be folded like a gable top pouch or a brick-shaped pouch.

### <2-11. Eleventh modification>

In the above-described embodiments, the outer contour shape of the outer packaging 40 can be arbitrarily changed. The outer contour shape of the outer packaging 40 may be a cylinder, a prism, or a cube.

### Reference Signs List

10 Electrical storage device
20 Electrode assembly
40 Outer packaging
50 Outer package film
60 Lid
70, 270, 370, 470, 570 Lid main body
72 Cover portion
72X Front surface
73 Rough surface
80 Cover

The following items are disclosed:
[Item 1] A lid used for an outer packaging of an electrical storage device,
   the lid comprising:
   a lid main body containing a metal material; and
   a cover that contains a resin material and covers a part of the lid main body,
   wherein the lid main body has a cover portion covered with the cover, and
   the cover portion has at least one of a through-hole, a recessed portion recessed on a side opposite to the cover, or a projecting portion protruding toward the cover.
[Item 2] The lid according to item 1, wherein at least a part of the cover portion is sandwiched by the cover.
[Item 3] The lid according to item 1 or 2, wherein at least a part of the cover portion has a rough surface.
[Item 4] A lid used for an outer packaging of an electrical storage device,
   the lid comprising:
   a lid main body containing a metal material; and
   a cover that contains a resin material and covers a part of the lid main body,
   wherein the lid main body has a cover portion covered with the cover, and
   at least a part of the cover portion has a rough surface.
[Item 5] The lid according to item 4, wherein a maximum height roughness Rz of the rough surface is in a range of 0.01 µm or more and 500 µm or less.
[Item 6] A lid main body constituting a lid used for an outer packaging of an electrical storage device, wherein
   the lid main body contains a metal material, and has a cover portion covered with a cover containing a resin material, and
   the cover portion has at least one of a through-hole, a recessed portion recessed on a side opposite to the cover, or a projecting portion protruding toward the cover.
[Item 7] A lid main body constituting a lid used for an outer packaging of an electrical storage device, wherein
   the lid main body contains a metal material, and has a cover portion covered with a cover containing a resin material, and
   at least a part of the cover portion has a rough surface.
[Item 8] An electrical storage device comprising:
   an electrode assembly; and
   an outer packaging that seals the electrode assembly,
   wherein the outer packaging includes:
      an outer package film that wraps the electrode assembly; and
      a lid joined to the outer package film,
   the lid includes:
      a lid main body containing a metal material; and
      a cover that contains a resin material and covers a part of the lid main body,
   the lid main body has a cover portion covered with the cover, and
   the cover portion has at least one of a through-hole, a recessed portion recessed on a side opposite to the cover, or a projecting portion protruding toward the cover. [Item 9] An electrical storage device comprising:
   an electrode assembly; and
   an outer packaging that seals the electrode assembly,
   wherein the outer packaging includes:
      an outer package film that wraps the electrode assembly; and
      a lid joined to the outer package film,
   the lid includes:
      a lid main body containing a metal material; and
      a cover that contains a resin material and covers a part of the lid main body,
   the lid main body has a cover portion covered with the cover, and
   at least a part of the cover portion has a rough surface.

## Claims

1. A lid used for an outer packaging of an electrical storage device,
the lid comprising:
a lid main body containing a metal material; and
a cover that contains a resin material and covers a part of the lid main body,
wherein the lid main body has a cover portion covered with the cover, and
at least a part of the cover portion has a rough surface.

2. The lid according to claim 1, wherein at least a part of the cover portion is sandwiched by the cover.

3. The lid according to claim 1 or 2, wherein a maximum height roughness Rz of the rough surface is in a range of 0.01 µm or more and 500 µm or less.

4. The lid according to any one of claims 1 to 3,
wherein the cover has a lid seal portion joined to an outer package film constituting an element of the outer packaging.

5. The lid according to any one of claims 1 to 4,
wherein the lid main body has a housing portion configured to house a current collector.

6. The lid according to any one of claims 1 to 5,
wherein the lid main body has a base portion, and the cover portion has a frame shape standing from the base portion.

7. The lid according to any one of claims 1 to 5,
wherein the lid main body has a base portion, and the base portion has a plate shape.

8. The lid according to claim 4,
wherein the lid seal portion has:
a plurality of seal surfaces joined to the outer package film; and
boundaries between the plurality of seal surfaces,
wherein at least one of the boundaries is rounded off.

9. The lid according to any one of claims 1 to 8,
wherein the material constituting the cover contains at least one of polyester and polyolefin.

10. The lid according to any one of claims 1 to 9,
wherein the lid has at least one of an adhesive film and an adhesive layer disposed between the lid main body and the cover.

11. A lid main body constituting the lid according to any one of claims 1 to 10.

12. An electrical storage device comprising the lid according to any one of claims 1 to 10,
wherein the electrical storage device comprises:
an electrode assembly; and
an outer packaging that seals the electrode assembly,
wherein the outer packaging includes:
an outer package film that wraps the electrode assembly; and the lid,
wherein the lid is joined to the outer package film.
